# EUROPEAN PATENT APPLICATION

(11) **EP 4 531 227 A1**
(43) Date of publication of application: **02.04.2025**
(21) Application number: 24202105.3
(22) Date of filing: 24.09.2024
(51) Int. Cl.: H02J 3/32, H02J 3/38, H02J 13/00

(54) **MANAGEMENT OF VIRTUAL POWER PLANT CONTROLLER**

(30) Priority: 26.09.2023 IN 202311064507
(71) Applicant: Nokia Solutions and Networks Oy, 02610 Espoo (FI)
(72) Inventor: NIEMELÄ, Tuomas, Helsinki (FI); HÄMÄLÄINEN, Seppo Olavi, Helsinki (FI); SALMELA, Olli Pekka, Helsinki (FI); VOLKOV, Topi Tuomas, Kantvik (FI); KOSKELA, Henri Jonni, Espoo (FI); S, Arun Prasath, Bangalore (IN)
(74) Representative: Nokia EPO representatives

(57) **Abstract**

Solutions to control use of back-up batteries of a radio access network in a virtual power plant are disclosed. In the solutions, a virtual power plant manager entity obtains site information on radio access network element sites, at least some of which are usable as additional power capacity providers in the virtual power plant, and energy balancing related information of a power grid using the virtual power plant. The virtual power plant manager entity determines, based at least on the site information and the energy balancing related information, for at least one virtual power plant entity for the virtual power plant, control information relating to the virtual power plant, the control information optimizing virtual power plant utility while maintaining radio network stability, and transmits said control information to the at least one virtual power plant entity.

## Description

### TECHNICAL FIELD

Various example embodiments relate to wireless communications.

### BACKGROUND

Communication systems are under constant development. One example is a possibility to use back-up batteries of a radio access network as additional power capacity providers to a power grid as long as regulatory requirements set to the back-up batteries for the radio access network are met. It is desirable to provide solutions to control the use of the back-up batteries to balance the power grid.

### SUMMARY

The independent claims define the scope.

According to a first aspect there is provided an apparatus comprising at least one processor and at least one memory storing instructions that, when executed by the at least one processor, cause the apparatus at least to: obtain site information on radio access network element sites, at least some of which are usable as additional power capacity providers in a virtual power plant; obtain energy balancing related information of a power grid using the virtual power plant; determine, based at least on the site information and the energy balancing related information, for at least one virtual power plant entity for the virtual power plant, control information relating to the virtual power plant, the control information optimizing virtual power plant utility while maintaining radio network stability; and transmit said control information to the at least one virtual power plant entity.

In embodiments, the at least one processor and the at least one memory storing instructions, when executed by the at least one processor, further cause the apparatus at least to: determine, based at least on geographical location information or battery state of charge information in the site information, whether to add a site to a blacklist indicating that the site is not usable as an additional power capacity provider or to a whitelist indicating that the site is usable as an additional power capacity provider; and transmit at least one of the blacklist and the whitelist in the control information.

In embodiments, the at least one processor and the at least one memory storing instructions, when executed by the at least one processor, further cause the apparatus at least to: determine that at least one local factor that is external to a site, the at least one factor having a variable value, is to be taken into account when determining, whether the site is in the blacklist; and transmit in the control information an indication of the site and the at least one local factor.

In embodiments, the at least one processor and the at least one memory storing instructions, when executed by the at least one processor, further cause the apparatus at least to: determine weight factors for at least a first operation mode of the virtual power plant, a second operation mode of the virtual power plant and a third operation mode of the virtual power plant, wherein the first operation mode comprises saving energy in the radio access network to minimize the amount of energy flow from the power grid while reducing quality of experience of network services without using batteries in the radio access network sites, the second operation mode comprises using the batteries to provide energy to the radio access network to minimize the amount of energy flow from the power grid while maintaining the quality of experience of network services, the third operation mode comprises discharging energy from the batteries to the grid; and transmit at least the weight factors in the control information.

In embodiments, the at least one processor and the at least one memory storing instructions, when executed by the at least one processor, further cause the apparatus at least to: determine, based on internal energy saving target for at least part of the wireless network, energy saving profiles or weight factors for energy saving profiles, per a virtual power plant entity in the at least part of the wireless network, or per a site in the at least part of the wireless network; and transmit at least the energy saving profiles or weight factors in the control information.

In embodiments, the at least one processor and the at least one memory storing instructions, when executed by the at least one processor, further cause the apparatus at least to use, when determining, also information indicating measured energy consumption in the site information.

In embodiments, the at least one processor and the at least one memory storing instructions, when executed by the at least one processor, further cause the apparatus at least to transmit in the control information price related information obtained in the energy balancing related information of a power grid and one or more condition.

In embodiments, the at least one processor and the at least one memory storing instructions, when executed by the at least one processor, further cause the apparatus at least to: receive from an external source additional energy balancing information; and forward the additional energy balancing information in the control information.

In embodiments, the at least one processor and the at least one memory storing instructions, when executed by the at least one processor, further cause the apparatus at least to: perform an offline training of a machine learning model using as training data at least real time traffic key performance indicators and long traffic key performance indicators in the site information on radio access network element sites; and transmit a trained model in the control information.

In embodiments, the at least one processor and the at least one memory storing instructions, when executed by the at least one processor, further cause the apparatus at least to: transmit in the control information configuration for the at least one virtual power plant entity, performance management information for collecting virtual power plant related performance data, and fault management information for monitoring virtual power plant related fault status.

In embodiments, the at least one processor and the at least one memory storing instructions, when executed by the at least one processor, further cause the apparatus at least to transmit the control information over O1 or A1 interface.

According to a second aspect there is provided an apparatus comprising at least one processor and at least one memory storing instructions that, when executed by the at least one processor, cause the apparatus at least to: control use of one or more radio access network elements as an additional power capacity provider in a virtual power plant; receive, from a virtual power plant manager entity, control information relating to a virtual power plant, the control information optimizing virtual power plant utility while maintaining radio network stability; determine, based on at least the control information received, per a radio access network element, its use as the additional power capacity provider; and transmit, at least per a radio access network element determined to be used as the additional power capacity provider, information relating to providing the power capacity in the virtual power plant.

In embodiments, the at least one processor and the at least one memory storing instructions, when executed by the at least one processor, further cause the apparatus at least to receive the control information over O1 or A1 interface.

In embodiments, the at least one processor and the at least one memory storing instructions, when executed by the at least one processor, further cause the apparatus at least to: determine, for one or more radio access network elements, which have been determined to be used as the additional power capacity provider, one or more policies; and transmit the one or more policies in the information relating to providing the power capacity in the virtual power plant.

In embodiments, the one or more policies comprises at least one of one or more conditions to be met, one or more durations, one or more radio access network element parameters, one or more site related parameters, and/or one or more actions.

According to a third aspect there is provided an apparatus comprising at least one processor and at least one memory storing instructions that, when executed by the at least one processor, cause the apparatus at least to: provide additional power capacity in a virtual power plant; receive from a virtual power plant controlling entity information relating to providing the power capacity in the virtual power plant; determine from the information one or more virtual power plant policies; and apply the one or more virtual power plant policies to control providing the additional power capacity.

In embodiments, the at least one processor and the at least one memory storing instructions, when executed by the at least one processor, further cause the apparatus at least to, when applying the one or more virtual power plant policies: determine a time to take a battery related action, determine a duration of an active battery related action, determine and apply an energy consumption based profile, and/or total amount of energy to be consumed from the battery.

According to an aspect there is provided a system comprising at least one apparatus according to the first aspect, or any of its embodiments, a plurality of apparatuses according to the second aspect, or any of its embodiments and a plurality of apparatuses according to the third aspect, or any of its embodiments.

According to a fourth aspect there is provided a method comprising at least: obtaining site information on radio access network element sites, at least some of which are usable as additional power capacity providers in a virtual power plant; obtaining energy balancing related information of a power grid using the virtual power plant; determining, based at least on the site information and the energy balancing related information, for at least one virtual power plant entity for the virtual power plant, control information relating to the virtual power plant, the control information optimizing virtual power plant utility while maintaining radio network stability; and transmitting said control information to the at least one virtual power plant entity.

According to a fifth aspect there is provided a method comprising at least: controlling use of one or more radio access network elements as an additional power capacity provider in a virtual power plant; receiving, from a virtual power plant manager entity, control information relating to a virtual power plant, the control information optimizing virtual power plant utility while maintaining radio network stability; determining, based on at least the control information received, per a radio access network element, its use as the additional power capacity provider; and transmitting, at least per a radio access network element determined to be used as the additional power capacity provider, information relating to providing the power capacity in the virtual power plant.

According to a sixth aspect there is provided a method comprising at least: providing additional power capacity in a virtual power plant; receiving from a virtual power plant controlling entity information relating to providing the power capacity in the virtual power plant; determining from the information one or more virtual power plant policies; and applying the one or more virtual power plant policies to control the providing.

According to a seventh aspect there is provided a computer readable medium comprising instructions stored thereon for performing at least one of a first process, a second process, or a third process, wherein the first process comprises at least: obtaining site information on radio access network element sites, at least some of which are usable as additional power capacity providers in a virtual power plant; obtaining energy balancing related information of a power grid using the virtual power plant; determining, based at least on the site information and the energy balancing related information, for at least one virtual power plant entity for the virtual power plant, control information relating to the virtual power plant, the control information optimizing virtual power plant utility while maintaining radio network stability; and transmitting said control information to the at least one virtual power plant entity, wherein the second process comprises at least: controlling use of one or more radio access network elements as an additional power capacity provider in a virtual power plant; receiving, from a virtual power plant manager entity, control information relating to a virtual power plant, the control information optimizing virtual power plant utility while maintaining radio network stability; determining, based on at least the control information received, per a radio access network element, its use as the additional power capacity provider; and transmitting, at least per a radio access network element determined to be used as the additional power capacity provider, information relating to providing the power capacity in the virtual power plant, and wherein the third process comprises at least: providing additional power capacity in a virtual power plant; receiving from a virtual power plant controlling entity information relating to providing the power capacity in the virtual power plant; determining from the information one or more virtual power plant policies; and applying the one or more virtual power plant policies to control the providing.

In an embodiment, the computer readable medium is a non-transitory computer readable medium.

According to a eight aspect there is provided a computer program comprising instructions which, when executed by an apparatus, cause the apparatus to perform at least one of a first process, a second process, or a third process, wherein the first process comprises at least: obtaining site information on radio access network element sites, at least some of which are usable as additional power capacity providers in a virtual power plant; obtaining energy balancing related information of a power grid using the virtual power plant; determining, based at least on the site information and the energy balancing related information, for at least one virtual power plant entity for the virtual power plant, control information relating to the virtual power plant, the control information optimizing virtual power plant utility while maintaining radio network stability; and transmitting said control information to the at least one virtual power plant entity, wherein the second process comprises at least: controlling use of one or more radio access network elements as an additional power capacity provider in a virtual power plant; receiving, from a virtual power plant manager entity, control information relating to a virtual power plant, the control information optimizing virtual power plant utility while maintaining radio network stability; determining, based on at least the control information received, per a radio access network element, its use as the additional power capacity provider; and transmitting, at least per a radio access network element determined to be used as the additional power capacity provider, information relating to providing the power capacity in the virtual power plant, and wherein the third process comprises at least: providing additional power capacity in a virtual power plant; receiving from a virtual power plant controlling entity information relating to providing the power capacity in the virtual power plant; determining from the information one or more virtual power plant policies; and applying the one or more virtual power plant policies to control the providing.

### BRIEF DESCRIPTION OF DRAWINGS

Embodiments are described below, by way of example only, with reference to the accompanying drawings, in which
Fig. 1 illustrates an exemplified high-level network architecture;
Fig. 2 illustrates an example functionality;
Fig. 3 illustrates an example functionality;
Fig. 4 illustrates an example functionality;
Fig. 5 illustrates an example of information exchange;
Fig. 6 illustrates an example of information exchange;
Fig. 7 illustrates an example of information exchange;
Fig. 8 is a schematic block diagram; and
Fig. 9 is a schematic block diagram.

### DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the structural elements are not restricted by the terms. The terms are used merely for the purpose of distinguishing an element from other elements. For example, a first element could be termed a second element, and similarly, a second element could be also termed a first element without departing from the scope of the present disclosure.

5G (fifth generation), 5G-Advanced, and beyond future wireless networks, aim to support a large variety of services, use cases and industrial verticals, for example unmanned mobility with fully autonomous connected vehicles, other vehicle-to-everything (V2X) services, or smart environment, e.g. smart industry, smart power grid, or smart city, just to name few examples. To provide variety of services with different requirements, such as enhanced mobile broadband, ultra-reliable low latency communication, massive machine type communication, wireless networks are envisaged to adopt network slicing, flexible decentralized and/or distributed computing systems and ubiquitous computing, with local spectrum licensing, spectrum sharing, infrastructure sharing, and intelligent automated management underpinned by mobile edge computing, artificial intelligence, for example machine learning, based tools, cloudification, short-packet communication, and blockchain technologies. For example, in the network slicing multiple independent and dedicated network slice instances may be created within the same infrastructure to run services that have different requirements on latency, reliability, throughput and mobility.

It is envisaged that key features of 6G (sixth generation) will include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

While a wireless communication network may use a power grid as its main power source, there may be sites that comprise one or more batteries as back-up power sources that may be used during power outages, for example. The back-up power sources, or at least some of them, may be organized as a virtual power plant wherefrom the power grid may discharge energy when a grid frequency starts to deviate from a nominal 50 Hz, provided that regulatory requirements for the wireless communication network are met.

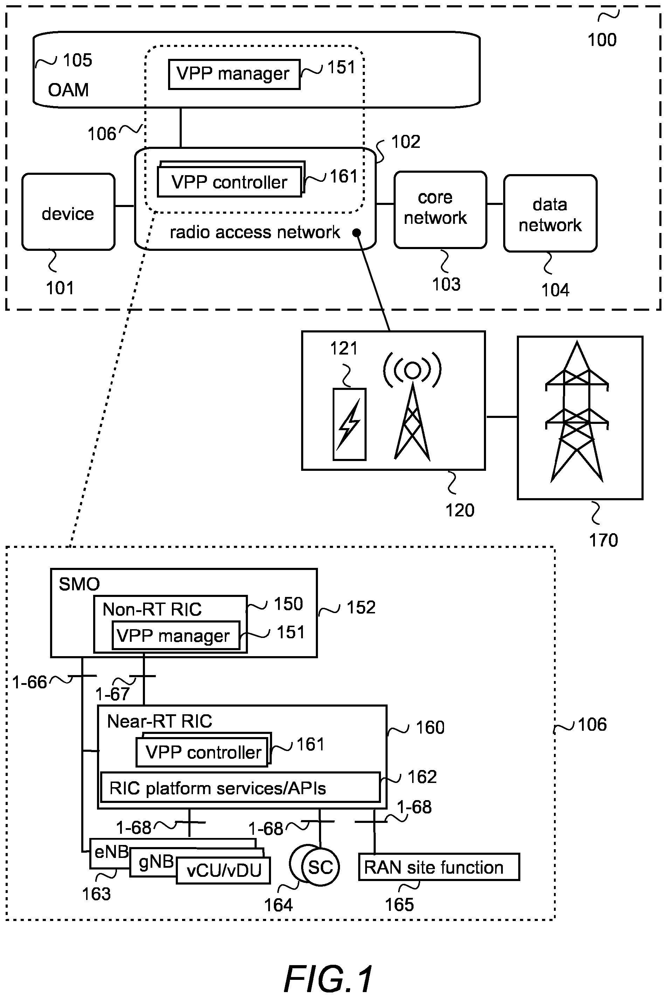

Fig. 1 illustrates an exemplified high-level cloud-native data-driven service-based network architecture providing a virtual power plant only showing some functional entities, all being logical units, whose implementation may differ from what is shown. The connections shown in Fig. 1 are logical connections; the actual physical connections may be different. Further, is should be appreciated that only some operational entities and components, with a non-limiting example of their mapping, are disclosed

The system 100 depicted in Fig. 1 is based on the 5G system (fifth generation system). The examples are described herein using principles and terminology of 5G without limiting the examples, and the terminology used to the 5G. A person skilled in the art may apply the solutions and examples to other communication systems, for example beyond 5G, e.g. 6G, 7G, provided with necessary properties. In 5G, components (elements, functional units) of service based architecture are defined using network functions that may be cloudified network functions. A network function supports or hosts a collection of services and offers one or more services to other network functions in the network. The network functions may be deployed as microservices. A service consumer, or shortly a consumer, is a network function requesting, or subscribing, a service from another network function, which is a service producer, or shortly a producer, that provides the service as a reply (response) or a notification.

Referring to Fig. 1, a wireless network 100, or a system comprising wireless networks, comprises device components 101 for device functionalities in device domain(s), access network components 102 for access network functionalities in access network domain(s), core network components 103 for core network functionalities in core network domain(s), data network components 104 for data network functionalities in data network domain(s), and an operations, administration and management (OAM) components 105 in an OAM domain for component/domain management, operation support system functionalities and orchestration on various levels, using electricity of a power grid 170.

A device component 101 may be any electrical device, or apparatus, connectable to an access network and configurable to be in a wireless connection on one or more communication channels, including one or more control channels, with an access network component 102 providing a cell, for example. The physical link from the device component 101 to the access network component 102 towards the core network component 103 is called an uplink or a reverse link and the physical link to the device component is called a downlink or a forward link. By way of example rather than limitation, the device component 101 may referred to as a mobile apparatus, a terminal device, a communication device, a user equipment (UE), a subscriber station (SS), a portable subscriber station, a mobile station (MS), or an access terminal (AT). A non-limiting lists of examples of the device component 101, or what the device component 101 may comprise or be comprised in, include a mobile phone, a cellular phone, a smart phone, a voice over internet protocol (VoIP) phone, a wireless local loop phone, a device using a wireless modem, a portable computer, a desktop computer, laptop-embedded equipment (LEE), laptop-mounted equipment (LME), a smart device, a multimedia device, an image capture terminal device, such as a digital camera, a gaming terminal device, a music storage and playback appliance, a drone, a vehicle, an automated guided vehicle, an autonomous connected vehicle, a vehicle-mounted wireless terminal device, a wireless endpoint, an internet of things device, an industrial internet of things device, a device operating in an automated processing chain and/or an industrial contexts, a consumer electronics device, a consumer internet of things device, a mobile robot, a mobile robot arm, a sensor, a surveillance camera, an eHealth related device, a medical monitoring device, a medical device, for example for remote surgery, a wearable device, such as a smart watch, a smart ring, a head-mounted display (HMD), an on-person device, etc. The device component may also be part of a group of device components seen as one device component, i.e. one mobile apparatus, by the wireless network.

An access network domain may be based on any kind of an access network, such as a cellular access network, for example 5G network, 5G-Advanced network, 6G network, etc., a non-terrestrial network, a legacy cellular radio access network, for example 4G or older generation network, or a non-cellular access network, for example a wireless local area network, or any combination thereof. To provide the wireless access, the access network comprises access network components 102, such as access network apparatuses, or access devices, radio access network elements, or radio access network nodes. An access device component 102 may provide one or more cells, possibly with different cell accessibility per a cell, but a cell is provided by one access device. However, there may be overlapping cells, for example a macro cell provided by an access device operating in co-operation of access nodes providing smaller cells, such as micro-, femto- or picocells, which overlap at least partly within the macro cell. There are a wide variety of access network components 102. A non-limiting lists of examples of the access network component 102, or what the access network component 102 may comprise or be comprised in, include different types of base stations, such as eNBs, gNBs, split gNBs, transmission-reception points, network-controlled repeaters, nodes operationally coupled to one or more remote radio heads, satellites, donor nodes in integrated access and backhaul (IAB), fixed IAB nodes, mobile IAB nodes mounted on vehicles, for example, etc.

At least some of the radio access network elements are on sites 120 that comprise batteries. Below such sites are called BTS sites, or shortly sites, for the clarity of description. Batteries 121 may be usable for the virtual power plant to balance the power grid 170. For example, the batteries 121 may be back-up batteries that may be oversized for virtual power plant purposes. The oversizing means that the battery capacity is larger than required for back-up purposes of the radio access network. Batteries in one BTS site may be used as a backup batteries for other access nodes in different sites. The oversizing provides more flexibility to use batteries according to what will be described below. In other words, the batteries in different sites (only one illustrated in Figure 1) form a distributed virtual power plant, or shortly VPP, that can be operated as a separate entity or be integrated to a virtual power plant of an electricity operator of the power grid 170. The idea of the virtual power plant is to create a marketplace, where for a short duration (e.g., until the actual reserve power plants start producing power), some external resources, such as batteries 121, are used so that the grid frequency is restored to its nominal value instantly or at least almost instantly. During offloading the power from the batteries 121,i.e. discharging the batteries, an access node in the BTS site 120 is run by the battery back-up system, or access nodes in the virtual power plant area may be run by the battery back-up system. For this VPP behavior, the transmission system operator of the power grid 170 may compensate the external parties who own these external resources. The price or bid indicates whether the power grid 170 needs power from external resources and whether the power grid has more power than the anticipated consumption, indicating a good time to recharge. For controlling use of the batteries 121, including time to recharge batteries discharged to the power grid 170, the radio access network domain contains virtual power plant controller entities 161 (VPP controller), which are managed and orchestrated by a virtual power plant manager (VPP manager) entity 151, or a management entity, in the operation and maintenance domain 105. The VPP manager entity may be called a management entity or a VPP management entity. However, any other deployment scenario may be used. Further, the VPP manager entity may manage also other components than VPP components.

Further, it should be noted that some of the components may be multi-domain components. For example a device component 101 may also provide services to other device components, i.e. operate also as an access network component 102, for example be a relay node, or a mobile IAB node, or a mobile termination part in an IAB node.

The core network components 103 form one or more core networks. A core network may be based on a non-standalone core network, for example an LTE-based network, or a standalone access network, for example a 5G core network. However, it should be appreciated that the core network, and the core network components 103, may use any technology that enable network services to be delivered between devices and data networks.

A data network may be any network, like the internet, an intranet, a wide area network, etc. Different remote monitoring and/or data collection services for different use cases may be reached via the data network and the data network components 104.

It is envisaged, as illustrated in Fig. 1, that an open radio access network (open RAN, O-RAN) platform 106 is used for the virtual power plant, to facilitate seamless communication and transfer of information at least between the virtual power plant controller and the virtual power plant manager 161.

The purpose of the open radio access platform 106 is to interact and guide the behavior of the radio access network, for example radio access network nodes in the radio access network 102. The open radio access network platform 106 may be implemented based on architecture defined by the O-RAN ALLIANCE, in which the open radio platform is called a radio intelligent controller (RIC). Fig. 1 illustrates an exemplified high-level open radio access network architecture 106 for the virtual power plant.

In the example of Fig. 1, the radio intelligent controller comprises a non-real-time part (non-RT RIC) 150 and a near-real-time part (near-RT RIC) 160. The non-real-time part 150 may be part of the service management and orchestration, SMO, framework 152, in the operation and maintenance domain 105 and the near-real-time part 160 may be on a radio access side in the radio access network domain 102. The non-RT RIC 150 manages events and resources with a response time of one second or more. The near-RT RIC 160 manages events and resources requiring a faster response down to 10 milliseconds (ms). Currently, the non-RT RIC 150 is deployed centrally, while the near-RT RIC 160 can be deployed centrally or on the network edge.

The non-RT RIC 150 is a platform for hosting applications micro-service-based applications called rApps. The non-RT RIC functionality includes configuration management, device management, fault management, performance management, and lifecycle management for all network elements in the network, across different access types, e.g. macro cells, massive MIMO, small cells. In other words, the non-RT RIC is to support non-real-time intelligent radio resource management, higher layer procedure optimization, policy optimization in radio access network, and providing AI/ML (artificial intelligence/machine learning) models to the near-RT RIC 160. The non-RT RIC 150 can use data analytics and AI/ML training/inference to determine the radio access network optimization actions for which it can leverage SMO services such as data collection and provisioning services of nodes 163, 164, 165 in O-RAN. The AI/ML model training may be performed in the non-RT RIC as offline training.

The near-RT RIC 160 is a near-real-time, micro-service-based software platform for hosting micro-service-based applications called xApps for providing RIC platform services amd can interact with the RIC via application programming interfaces (APIs) 162. xApps can also exchange information between them, enabling to build sophisticated use cases leveraging the capabilities of multiple xApps. In other words, the near-RT RIC software platform provides xApps cloud-based infrastructure for controlling in an area radio access network logical nodes 163, such as an eNB (evolved Node B), gNB, a split gNB comprising vDU (virtualized distributed unit), and its virtualized centralized unit vCU, which may further be split into a control plane component, and to a user plane component, small cells (SC) 164 and/or RAN site functions 165 for e.g. cell site auxiliary equipment, such as the batteries 121 including recharging and discharging of the batteries by power supply units, for example.The near-RT RIC 160 may use AI/ML models for inference to determine optimization actions, and the near-RT RIC 160 may further online train an AI/ML model.

To enhance use of RIC to control VPP for the purpose of maximizing VPP utility, for example VPP revenue, in view of the network operator while maintaining access network stability, the VPP manager 151 is an application (rApp) running in the non-RT RIC 150 and the VPP controllers 161 are applications (xApp) running in the RT-RIC 160. In other words, in addition to use of RIC for managing and optimizing radio access network, the present implementation uses RIC for management and optimization of the power system, related VPP use case and any other auxiliary function at the cell site, that will be described herein.

This control of VPP may utilize O1 interface 1-66 connecting the SMO 152 to the RAN network functions, including the near-RT RIC 160 or A1 interface 1-67 connecting the non-near-RT RIC 150 to the near-RT RIC 160, and E2 interface 1-68 connecting the near-RT RIC 150 with the RAN functions, small cells, and the RAN-site functions. The O1 interface is a fault, configuration, accounting, performance and security (FCAPS) interface, using the consumer-provider structure, for example for provisioning management services, e.g. a consumer in the SMO 152 to configure attributes that may modify a provider's capabilities in its role in end-to-end network services, and to report configuration changes back to the consumer. Further non-limiting examples include fault supervision management allowing a provider to report errors and events, and performance assurance management allowing a provider to report performance data. The A1 interface is a declarative policy interface, for conveying service level policies, which include, in addition to the herein disclosed VPP policy, following policy types, which are used to control radio network resource usage to reach a desired service performance level: quality of service target, quality of experience target, traffic preferences, quality of service optimization with resource directive, quality of experience optimization with resource directive, user equipment level target, slice service-level agreement target and load balancing. It should be appreciated that the list is a non-limiting list of examples.

Using the O-RAN platform also for VPP related policies and management operations, as will be described below, it is possible to, for example:
- take into account in VPP site selection related status changes, such as a weather condition or BTS site related attributes, that have impact to the available reserve capacity for VPP purposes
- have policies for optimizing between a cost of energy and a VPP revenue
- have a dynamic policy control of access network elements' energy consumption characteristics for meeting environmental policies while also meeting end-user quality of service targets
- have a capability for properly measuring consumed energy per a delivered bit over radio interface
- have a commercial management policy control solution related to above optimization
- connect VPP related external market data, such as electricity price, to the VPP controller application in O-RAN via VPP management solution in SMO
- have data management and machine learning architecture enabling use of long term traffic key performance indicators, KPIs, real time traffic KPIs and power system real time information for energy related machine learning modeling and optimization
- have VPP related fault, configuration, accounting, performance and security (FCAPS) management integrated with overall network management system
- configure power supply units to autonomously make VPP related decisions

It should be appreciated that even though herein the examples disclosed relate to VPP use to control telecom equipment, the teachings herein may be applied to control of other auxiliary site equipment, such air-conditioning systems and/or energy consumption of non-telecom equipments, e.g. pump storage stations.

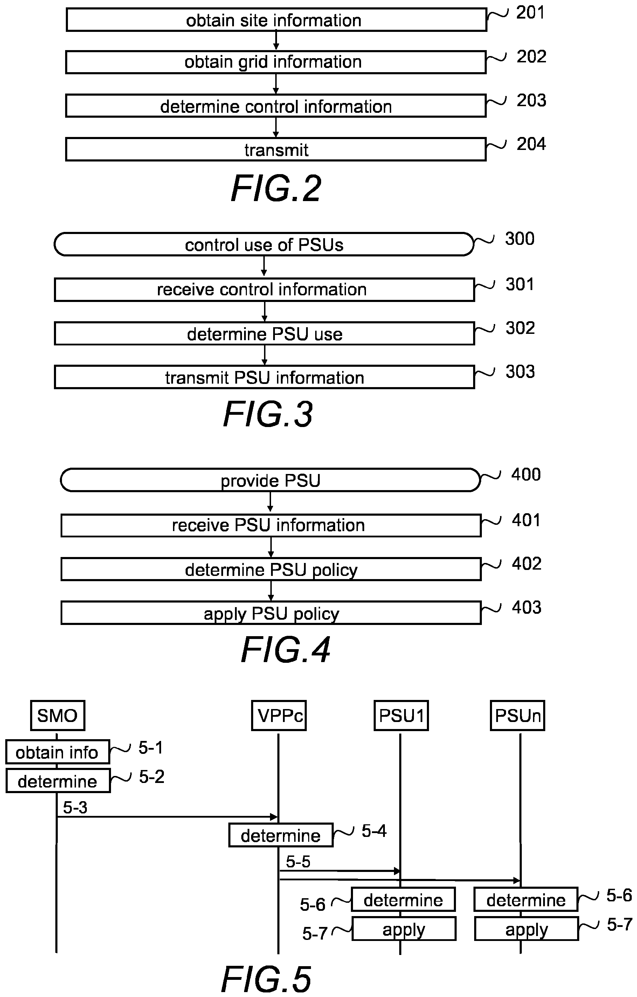

Fig. 2 is a flowchart illustrating a non-limiting example functionality of a VPP manager, or an apparatus operating as the VPP manager.

Referring to Fig. 2, site information on radio access network element sites, at least some of which are usable as additional power capacity providers in a virtual power plant, is obtained in block 201. In other words BTS site information is obtained. Further, energy balancing related information of a power grid using the virtual power plant is obtained in block 202. As described above, the energy balancing information is usually price information - a high price indicating a high need for the power grid to discharge the batteries, i.e. to use power provided by the VPP, a low price indicating no need to discharge the batteries. In other words, the price of electricity indicates a difference between anticipated consumption of electricity and generation of electricity. Based at least on the site information and the energy balancing related information, for at least one virtual power plant entity for the virtual power plant, or VPP controller, control information relating to the virtual power plant is determined in block 203, the control information optimizing virtual power plant utility while maintaining radio network stability. When energy balancing information is price related information, the control information is determined optimizing VPP revenues while maintaining radio network stability. Said control information is transmitted in block 204 to the at least one virtual power plant entity. The control information may be transmitted over the O1 or A1 interface. The virtual power plant entity may be a radio access network intelligent controller entity or a virtual power plant function.

In an implementation, the site information comprises geographical location information and/or battery state of charge information. In the implementation, it is determined in block 203, based at least on the geographical location information or the battery state of charge information in the site information, whether to add a site to a blacklist indicating that the site is not usable as an additional power capacity provider or to a whitelist indicating that the site is usable as an additional power capacity provider. Further, at least one of the blacklist and the whitelist is transmitted in the control information.

For example, geographical black list for VPP may be based on following attributes:
- sites in critical areas (e.g. an airport, a harbor)
- sites where coverage is scarce, e.g. rural sites without overlapping coverage
- sites where a battery state of charge is such that their capability to meet regulatory backup requirements is compromised. This can be due different reasons, e.g. deteriorated battery performance. Regulatory backup requirements may be, for example, 3 hours battery operation during power outage. It should be appreciated that the time can vary in different areas, as well as the content of the regulatory backup requirements.

In an implementation, combinable with the above implementation, one or more of the sites may be a dynamic site, i.e. a state that may be, depending on local circumstances, on the black list or on the white list. In the implementation, it is determined in block 203 that at least one local factor that is external to a site, the at least one factor having a variable value, is to be taken into account when determining, whether the site is in the blacklist. An indication of the site and the at least one local factor may be transmitted in the control information, for the VPP controller to determine whether a dynamic site is in the black list. Alternatively, the VPP manager may update the black list and the white list dynamically. A non-limiting list of examples of the at least one local factor include events or weather forecast from external data sources, and different alarms, such as temperature alarms or battery related alarms, or alarms indicating that access network device performance is degraded.

New elements for the A1 interface may include following policies:
- VPP black list/white list on BTS site level based on BTS (access network element) identifier(s) or BTS site identifier(s)
- Optionally, including reason code for black listed/white listed BTS or BTS site

For example, for weather information following information enrichment may be used: list of weather forecast and current weather, area, region, site.

In another implementation, combinable with any of the above ones, determining the control policy includes determining weight factors for at least a first operation mode of the virtual power plant, a second operation mode of the virtual power plant and a third operation mode of the virtual power plant. The first operation mode comprises saving energy in the radio access network to minimize the amount of energy flow from the power grid while reducing quality of experience of network services without using batteries in the radio access network sites. The second operation mode comprises using the batteries to provide energy to the radio access network to minimize the amount of energy flow from the power grid while maintaining the quality of experience of network services. The third operation mode comprises discharging energy from the batteries to the power grid. In the implementation, at least the weight factors are transmitted in the control information. In other words, a policy may be provided as weight factors for energy cost and VPP revenue optimization.

Using the price of the electricity, and taking into account that discharging impacts battery lifetime, the VPP manager in the SMO may provide a policy as weight factors, a weight factor optimizing costs vs revenue for energy, battery life time and/or VPP bid revenue. The first operation mode may be reworded to a VPP with energy saving to minimize energy cost with the expense of reduced quality of experience without impacting battery life time. The second operation mode may be reworded to a VPP by using batteries increasing VPP revenue compared to using energy saving with the penalty of increased energy cost and battery life cycle cost without impacting the quality of experience. The third operation mode may be reworded to a VPP by discharging to the power grid increasing VPP revenue compared to using batteries with the penalty of increased energy cost and battery life time cost. In other words, the VPP manager performs an analysis over a wider area and longer term, and steers local RICs, i.e. the VPP controllers by VPP policy that controls use of different VPP execution methods in comparable metrics for energy cost, battery life time cost, quality of experience impact and VPP revenue. The policies may be realized with, for example, weight factors for different cost/revenue items so that they are in the same scale (e.g. through converting to euros).

For the implementation of determining the weight factors, the site information may comprise quality of experience information, for example quality of experience in an area, in a region, in a site, and the quality of experience information may be relative or absolute. The energy balancing information may comprise, in addition to the energy price information, carbon footprint information and/or corresponding price information.

New elements for the A1 interface may include following policies:
- energy savings
- use of batteries
- discharging to the power grid

In another implementation, combinable with any of the above ones, it is determined, based on internal energy saving target for at least part of the wireless network, energy saving profile(s) or weight factors for energy saving profile(s), per a virtual power plant entity in the at least part of the wireless network, or per a site in the at least part of the wireless network. At least the energy saving profiles or the weight factors for energy saving profiles are transmitted in the control information.

The energy saving profiles for VPP controllers, or the weight factors for the energy saving profile(s), may be based on internal energy saving target for the entire network or a part of network, given by a regulator, and/or by a network operator. The VPP manager may use the energy saving target, or a set of energy saving targets, as input when defining the weight factors for the energy saving profile(s). The energy saving profile(s), or weight factors for the energy saving profile(s), may be on a network level, or the part of the network level, and/or there may be more aggressive energy saving profiles, e.g a profile per a BTS site that cannot meet energy consumption requirements or energy consumption per an end-user transmitted bit is high in the BTS site. The energy consumption per end-user transmitted bit may be determined using a relation of traffic volume to traffic type (e.g. fixed wireless, voice, mobile broadband, etc.) and the relation may be determined per an area, per a region, per a site, and/or using different factors, such as proportional fairness factors enabling to ensure that energy needs of all sites are sufficiently covered. The VPP manager may provide the site specific weight factors for energy saving, or the VPP manager may provide weight factor profiles for different achieved energy saving levels and the VPP controller(s) may apply these profiles for individual sites as per measured by a corresponding VPP controller.

Also for the energy saving profile implementation, new elements for the A1 interface may include following policies:
- energy savings
- use of batteries
- discharging to the power grid

It should be appreciated that the energy saving profile(s) may impact also to black list/white list described above.

In another implementation, combinable with any of the above ones, the VPP manager transmits in the control information price related information obtained in the energy balancing related information of a power grid and one or more condition. The price related information may be energy and/or frequency balancing prices, provided online or offline, possibly including corresponding historical price information, the prices comprising, for example, one or more of following:
- realized bid prices: list of a realized price, date, time, capacity
- a daily price: day minimum price, day maximum price
- prices for a range: range, max price for range, min price for range
- a predicted price: predicted optimum bidding price, predicted optimum bidding range for specific time period
- prices per a use case (fast frequency reserve (FFR), frequency containment reserve for disturbance (FCR-D), frequency containment reserve for normal operations (FCR-N), automatic frequency restoration reserve (aFRR).

The same structure may apply both to the energy and to the frequency balancing market price. The frequency balancing market prices can be common for all use cases or some of the use cases or specific to FFR, FCR-D, FCR-N and aFRR.

Using the price related information the VPP manager may provide one or more of following commercial parameters and policies for the VPP controller:
- energy price for peak shaving at different times of a day
- bidding price and related thresholds/range
- energy and power amount and related thresholds/range for bidding
- use case policies based on estimated commercial value
- rules and thresholds for using each of the VPP use case (FFR, FCR-D, FCR-N, aFRR)

New elements for the A1 interface may include one or more of following policies:
- target bidding price, bidding price range (min, max)
- target energy/power amount, energy/power range (min, max)
- price and energy/power policies per a use case

In another implementation, combinable with any of the above ones, the VPP manager receives from an external source additional energy balancing information, and forwards the additional energy balancing information in the control information. For example, an external application provides energy market related price information, which may be real time or non-real time information, and other insights to one or more VPP controllers via the VPP manager (via SMO/via non-RT RIC). The additional energy balancing information may comprise historical information (latest, day min and max price for certain interval), predicted optimum bidding price/range for specific time period, and/or energy price or balancing reserve price, which may be common for all use cases or common to some of the use cases or use case (FFR, FCR-D, FCR-N and aFRR) specific.

In another implementation, combinable with any of the above ones, the VPP manager performs an offline training of a machine learning model using as training data at least real time traffic key performance indicators (KPIs) and long traffic key performance indicators in the site information on radio access network element sites, and transmits a trained model in the control information. This provides an optimal use of energy consumption and traffic KPI data.

For example, the VPP controller, or another entity in the near-RT RIC, provides accurate energy consumption data with high granularity (e.g. 100ms) to the VPP manager or another entity in the non-RT RIC for offline machine learning model training, which also uses in the training real time traffic KPIs and long traffic KPIs received from the network management system. The VPP manager provides the trained model for inference in the VPP controller.

Still a further example includes transfer learning, where a base model is trained by the VPP manager or another entity in the non-RT RIC with less granular energy consumption and traffic KPI data and transmitted to the VPP controller, or another entity in the near-RT RIC that continues training based on its real time energy and traffic data while the VPP controller uses the model for inference.

It should be appreciated that it is possible that the VPP controller, or another entity in the near-RT RIC, may perform online training to a machine learning model, using accurate real time energy consumption data, real time traffic KPIs and/or long traffic KPIs received from the VPP manager or another entity in the non-RT RIC or from a network management system. The VPP controller may use the model for inference.

In another implementation, combinable with any of the above ones, the VPP manager transmits in the control information configuration for the at least one virtual power plant entity, performance management information for collecting virtual power plant related performance data, and fault management information for monitoring virtual power plant related fault status. This enables to properly gather information of the VPP controller system performance and fault events.

The configuration management (CM) information for VPP controller(s) for specific sites or across all sites in the network may include enabling/disabling a VPP controller, one or more threshold for various VPP actions, network configuration, etc. Performance management (PM) information for the VPP controller(s) for collecting VPP related performance data may include reserve capacity metrics, energy consumption metrics, VPP action metrics, etc. The fault management (FM) information for the VPP controller(s) for monitoring VPP controller(s) fault status may include connection losses and application failures.

More specifically, enabling/disabling a VPP controller may include activation of the different use cases (FFR, FCR-D, FCR-N, aFRR). The thresholds may be battery related thresholds to identify if a battery is usable for VPP, such as thresholds for state of charge, and/or for state of charge rate change (e.g. how fast battery charge can go lower), voltage threshold, temperature threshold to identify is a battery is usable for VPP purpose, and/or bidding related thresholds, such as a safety margin on top of estimated reserve capacity, a correction factor to dynamically optimize safety margin, and/or thresholds for selecting BTS sites for reserve, such as number of activations during a given period. The network configuration information may comprise transmission system operator (TSO) and/or aggregator configurations, for example IP addresses per an instance, and roles, e.g. a primary or a secondary, a BTS site power system configuration, such as IP addresses per a power supply unit (PSU), and configuration profiles, for example per a BTS site and/or per a VPP controller. The configuration management information may further comprise timers and intervals, such as a maximum duration for battery operation, or a schedule for VPP activation for different BTS sites, or weight factors, such as weight factors for radio access network element parameters for selecting BTS site as a part of reserve, or weight factors for power consumption.

A non-limiting list for performance management information examples include a reserve capacity per BTS site and for all BTS sites, bidding results (average/max/min price data for accepted/rejected bids for own or others), energy consumption, battery status (temperature, state of charge, state of health, voltage), VPP controller action metrics (time, number of events), consumed energy per end-user bit transferred over the radio interface, etc.

A non-limiting list for fault management information examples include connection lost to power system (PSU and frequency measurement devices) or aggregator/TSO, the VPP controller application and platform failure, and failed VPP actions.

It should be appreciated that the control information may comprise configuration for any other site auxiliary function, corresponding performance management information, and/or fault management information.

Further, any of the above implementations may be extended to cover optimization needs, with information needed for optimizations, of any other site function, including but not limited to:
- electricity consumption optimization in relation to the intended effectiveness of the site function operation.
- maximizing the effectiveness auxiliary site function (e.g. timing of air cooling to compensate heat generated access network equipment during a forecasted traffic peak).

It should be appreciated that in any of the above implementations and combination thereof, multiple policies may be transmitted in the control information and/or one or more of the policies may comprise time based automated activation/deactivation, and/or one or more of the policies may comprise a conditional activation/deactivation of a policy based on provided criteria/rule(s) in the control information. Further, any of the policies may be conditional in the terms of any of their parameters in relation to enrichment information allowing the VPP controller to resolve the condition (e.g., conditional black listing policy relate to weather conditions and weather data as enrichment information to enable the VPP controller to conclude black listed sites).

Fig. 3 is a flowchart illustrating a non-limiting example functionality of a VPP controller, or an apparatus operating as a VPP controller that interacts with the VPP manager.

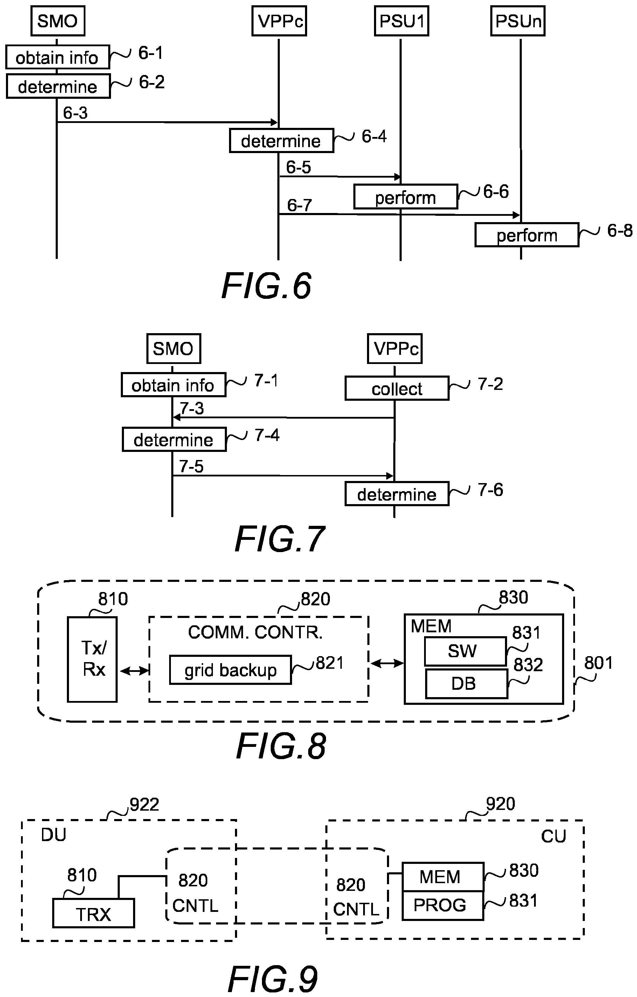

Referring to Fig. 3, the VPP controller is configured to control (block 300) use of one or more radio access network elements as an additional power capacity provider in a virtual power plant. In other words, the VPP controller is configured to control power supply units (PSUs). When the VPP controller receives (block 301), from a service and management orchestration entity, for example from the VPP manager over the O1 or A1 interface, control information relating to a virtual power plant, the control information optimizing virtual power plant utility while maintaining radio network stability, it determines (block 302), per a radio access network element, its use as the additional power capacity provider, and transmits (block 303), at least per a radio access network element determined to be used as the additional power capacity provider, information relating to providing the power capacity in the virtual power plant. In other word, the VPP controller transmits in block 303 PSU information. Fig. 5 and Fig. 6 illustrate some example how the PSU information may be transmitted.

Different non-limiting examples of the control information are given above with Fig. 2.

Fig. 4 is a flowchart illustrating a non-limiting example functionality of a PSU, or an apparatus operating as a PSU that interacts with a VPP controller but may also control itself according to a policy received. In other words, Fig. 4 illustrates PSU functionality in implementations in which some of the intelligence of a VPP controller is distributed to PSUs.

Referring to Fig. 4, the apparatus is equipped to provide (block 400) the PSU, i.e. to provide additional power capacity in a virtual power plant. When information relating to providing the power capacity in the virtual power plant, i.e. PSU information, is received (block 401), from a virtual power plant controlling entity, such as a VPP controller, one or more virtual power plant policies are determined (block 402) from the information, and the one or more virtual power plant policies are applied (block 403) to control equipment(s) and battery, or other means for providing the additional power capacity in the virtual power plant.

For example, when applying the one or more virtual power plant policies, the PSU may determine a time to take a battery related action, determine a duration of an active battery related action, determine and apply an energy consumption based profile, and/or total amount of energy to be consumed from the battery.

For example, a policy for fast frequency reserve may comprise a policy decision and policy activation. In a non-limiting example, the PSU may have received 'ACTIVATION' policy due to which use case duration is set to 30 seconds, reporting frequency to 100ms, alternating current (AC) off, battery recharge off and the next stage that the PSU should enter to as 'RECOVERY'. This ensures that the PSU can autonomously move to another state (safe state, from batteries to AC) even in case a connection to the VPP controller is lost. Thanks to this, a specific problem that may occur when the base station site is commanded to go to the battery operation, and connection to the VPP controller is lost, the PSU can decide to move back to the AC operation without waiting for a corresponding command from the VPP controller. Should the command be waited for before moving back to the AC operation, it may be that before the connection is re-established so that the command could be transmitted, the BTS site and radio access network element may have been shut down after batteries become empty.

Fig. 5 illustrates an example of information exchange when PSUs are intelligent PSUs. A benefit of policy based communication is that the PSU would be able to execute VPP actions independently even if the central entity would not be able to communicate with PSU.

Referring to Fig. 5, the VPP manager, denoted by SMO, or another SMO entity, obtains in block 5-1 the site information on a plurality of PSUs, and the energy balancing related information, as described above, determines in block 5-2 the control information for the virtual power plant, as described above, and transmits (message 5-3) the control information over A1 or O1 interface to one or more VPP controllers (only one, VPPc, is illustrated in Fig. 5, for the clarity of description).

When the VPP controller VPPc receives the control information, it determines in block 5-4 the one or more policies for one or more PSUs, wherein the one or more policies comprise at least one of one or more conditions to be met, one or more durations, one or more radio access network element parameters, one or more site related parameters, and/or one or more actions.

A non-liming examples of what a policy may be based on include one or more conditions of the policy, and/or duration of a policy, and/or PSU related policy parameters, and/or BTS site related policy parameters and/or actions.

A condition of the policy may be a trigger event, a given calendar time, a power consumption, a rectifier load, a battery temperature, a battery status of health, direct current (DC) voltage (set, bud), AC, one or more alarms, one or more regulatory requirements, e.g. min battery operation, one or more weather conditions, one or more sensors in the BTS site, e.g. weather climate sensors, etc..

A duration of the policy may be based on, or given as, a time duration, a power consumption, a battery level, battery level alarms and severity, rectifier alarms and severity, a battery temperature, a stop condition, etc.

The PSU related policy parameters may be based on battery capacity and known reaction time.

The site related policy parameters may be based on equipment type (e.g. rural, urban/sub-urban BTS site), equipment criticality (e.g. backup power for hospital) enabling that some PSUs can exclude themselves from e.g. energy saving action requested from the VPP controller, a number of equipment served. regulatory requirements for different types equipment such as BTS site, location of equipment, etc.

The action may be, or may be based on the following:
- go to default
- script based on policy
- battery test: time for battery test, test discharge Ampere hours, left capacity Ampere hours, test voltage, test interval (min, max), schedule, test state, test command
- reporting method for measurement (e.g. averaging or sending individual measurements)

The one or more policies are then transmitted (message 5-5) in the information relating to providing the power capacity in the virtual power plant to a plurality of PSUs that have capability to make independently decisions.

The transmission may be a broadcast, as in the example of Fig. 5, for example using SNMP MIB (simple network management protocol management information base), or using other protocol. For example, it would be enough to just broadcast a grid frequency to PSUs instead of transmitting multiple VPP commands to each PSU separately. However, the transmission may be per a PSU.

When a PSU receives the policy, it determines (block 5-6) one or more actions, as described above with Figure 4, and applies (block 5-7) the actions.

The actions based on policies may be, for example, one or more of the following:
- scheduled time to
   - activate/deactivate the battery operation so that
      - AC is switched off/on, or
      - discharge/stop discharge of battery to the grid
   - charge battery
   - in power distribution unit switch DC off (for some of the load)
- duration of operation
   - duration of activated in battery operation (e.g. just activate in battery operation mode for 30 secs/10 mins only).
   - duration of DC off for energy saving
- energy consumption based profile
   - battery operation based on the range of battery percentage of charge left in the battery (e.g. 60% to 80%)
   - to reach the max peak shaving, switch between AC/battery upon reaches to certain battery percentage.
   - DC off / on based on the total power consumption
- total amount of energy to be consumed from the battery

The solution(s) described above can be applied, in addition to rectifiers and batteries, to the control of power distribution units, fuses and breakers, diesel generators, solar panels, fuel cells, etc.

Fig. 6 illustrates an example of information exchange when PSUs are not intelligent PSUs. It should be appreciated that a VPP controller may be configured to implement both information exchanges, based on PSU capabilities.

Referring to Fig. 6, the VPP manager, denoted by SMO, or another SMO entity, as in the example of Fig. 5, i.e. obtains in block 6-1 the site information on a plurality of PSUs, and the energy balancing related information, as described above, determines in block 6-2 the control information for the virtual power plant, as described above, and transmits (message 6-3) the control information over A1 or O1 interface to one or more VPP controllers (only one is illustrated in Fig. 6, for the clarity of description).

When the VPP controller VPPc receives the control information, it determines in block 6-4 the one or more policies for one or more PSUs, and corresponding actions, and applies them by sending, per a PSU a command to perform an action. In the illustrated example, a command is transmitted (message 6-5) to PSU1, which, when receiving the command, performs in block 6-6, the action. Similarly, a command is transmitted (message 6-7) to PSUn, which, when receiving the command, performs in block 6-8 the action.

Fig. 7 illustrates an example of information exchange when the VPP manager, or another SMO entity, may at least use, when determining the control information, also other information in the site information, for example information indicating measured energy consumption. For the sake of clarity of description, only one VPP controller is illustrated, even though there may be a plurality of VPP controllers performing the same information exchange.

Referring to Fig. 7, the VPP manager, denoted by SMO, or another SMO entity, as in the example of Fig. 5, i.e. obtains in block 7-1 the site information, and the energy balancing related information, as described above. However, in the example, the site information further comprises information collected by the VPP controller VPPc.

Hence, the VPP controller VPPc collects in block 7-2 information indicating measured energy consumption. For example, collecting in block 7-2 may comprise measuring consumed energy per an end-user bit transferred over the radio interface, which may constitute an energy efficiency metric of a BTS site/radio access technology (RAT) type/cell. For example, the VPP controller may collect accurate power consumption information from the power system in the BTS site and combine it with data volume KPI information from the access network element to calculate consumed energy per a transferred end-user bit.

The VPP controller provides the calculated energy efficiency metric to the VPP manager, or another SMO entity, in message 7-3, over A1 or O1 interface. Message 7-3 may comprise information indicating types/attributes for energy consumption per transmitted bit, such as:
- traffic volume: traffic type(e.g. fixed wireless, mobile broadband, voice, ...), traffic volume, area, region, site
- factors, e.g. proportional fairness factors enabling to ensure that all sites energy needs are sufficiently covered

The VPP manager, or another SMO entity, determines in block 7-4 the control information for the virtual power plant, as described above but using also the enrich information received in message 7-3, and transmits (message 7-5) the control information over A1 or O1 interface to the VPP controller.

When the VPP controller VPPc receives the control information, it determines in block 7-6 one or more policies, as described with block 5-4 above, or one or more actions, as described with block 6-4 above, and the information exchange continues correspondingly.

In an implementation, the VPP controller uses the calculated energy efficiency metric for a BTS site selection and other VPP decisions.

In another implementation, energy efficiency metric calculation is implemented in the VPP manager, or in another entity in the non-RT RIC, or in the network management system, or in the access network element.

The above implementations and examples disclose A1 policy scenarios using A1 policy interface or as configuration parameters in O1 that holistically govern the use of telecom, power system and energy storage resources by running the end-to-end system of the RIC in a way that somewhat conflicting interests and needs are harmonized, or at least the VPP controller is configured to apply the policy the network operator wants to promote at any given time.

Additionally, information delivery from the SMO/VPP manager to the VPP controller, are disclosed, to enable the needed intelligence to execute the above mentioned optimization policies / configurations. The information delivery may use A1 EI interface.

It should be appreciated that instead of transmitting policy over A1 interface, corresponding information may be transmitted for example as A1 enrichment information, wherein a VPP controller may create/determine its own policy based on the enrichment information. Still a further possibility is that the VPP controller may receive a conditional policy and enrichment information related to the condition, thus enabling the VPP controller to resolve the condition locally.

Even though in the above the examples and implementations are using RT RIC and SMO, it should be appreciated that the examples and implementations may be used as well in cases, where a VPP controller is implemented as an independent function or as a function within some other network functions, and in cases where the VPP manager, or SMO functionality, is represented as a traditional network management, element management or SON systems. In these cases, for example, the interface can be other than A1 and O1.

The blocks, related functions, and information exchange (messages, signaling) described above by means of Fig. 1 to Fig. 7 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

Fig. 8 illustrates an apparatus 801 that may be configured to perform any functionality of an apparatus described herein. The apparatus 801 may be a VPP entity, or VPP controller, examples of which are listed above. The apparatus 801 may be a VPP manager entity, examples of which are listed above. Further, the apparatus 801 may be a power supply unit, examples of which are listed above. Fig. 9 illustrates an apparatus that may implement distributed functionality of the apparatus illustrated in Fig. 8.

The apparatus 801 may comprise one or more communication control circuitry 820, such as at least one processor, and at least one memory 830, including one or more algorithms 831, such as a computer program code (software) wherein the at least one memory and the computer program code (software) are configured, with the at least one processor, to cause the apparatus to carry out any one of the exemplified functionalities of a corresponding apparatus, described above with any of Fig. 1 to Fig. 7. Said at least one memory 830 may also comprise at least one database 832.

Referring to Fig. 8, the one or more communication control circuitries 820 of the apparatus 801 comprise at least a grid backup circuitry 821 which is configured to perform virtual power plant related functionalities, such as determining control information, or determining element(s) to be used as additional power capacity provider(s), or determining and applying one or more policies. To this end, the grid backup circuitry 821 of the apparatus 801 is configured to carry out at least some of the functionalities of a corresponding apparatus, described above, e.g., by means of Fig. 1 to Fig. 7, using one or more individual circuitries.

Referring to Fig. 8, the memory 830 may be implemented using any suitable data storage technology, such as semiconductor based memory devices, flash memory, magnetic memory devices and systems, optical memory devices and systems, fixed memory and removable memory.

Referring to Fig. 8, the apparatus 801 may further comprise different interfaces 810 such as one or more communication interfaces (TX/RX) comprising hardware and/or software for realizing communication connectivity according to one or more communication protocols. The one or more communication interfaces 810 may enable connecting to the Internet and/or to a core network of a wireless communications network and/or to a radio access network and/or to other apparatuses within range of the apparatus. The one or more communication interface 810 may provide the apparatus with communication capabilities to communicate in a cellular communication system and enable communication to different network components or mobile apparatuses, e.g., terminal devices or user equipments, for example. The different interfaces 810 may further comprise an interface for receiving signals to determine a location of the apparatus and/or external conditions at the site, such as temperature. The one or more communication interfaces 810 may comprise standard well-known components such as an amplifier, filter, frequency-converter, (de)modulator, and encoder/decoder circuitries, controlled by the corresponding controlling units, and possibly one or more antennas.

In an embodiment, as shown in Fig. 9, at least some of the functionalities of the apparatus of Fig. 8 may be shared between two physically separate devices, forming one operational entity. Therefore, the apparatus may be seen to depict the operational entity comprising one or more physically separate devices for executing at least some of the described processes. Thus, the apparatus of Fig. 9, utilizing such shared architecture, may comprise a control unit CU 920, or a remote control unit, such as a host computer or a server computer, operatively coupled (e.g. via a wireless or wired connection) to a remote distributed unit DU 922 located in the apparatus or in a remote head of the apparatus. In an embodiment, at least some of the described processes may be performed by the CU 920. In an embodiment, the execution of at least some of the described processes may be shared among the DU 922 and the CU 920.

Similar to Fig. 8, the apparatus of Fig. 9 may comprise one or more communication control circuitries (CNTL) 820, such as at least one processor, and at least one memory (MEM) 830, including one or more algorithms (PROG) 831, such as a computer program code (software) wherein the at least one memory and the computer program code (software) are configured, with the at least one processor, to cause the apparatus to carry out any one of the exemplified functionalities of the mobile apparatus, or exemplified functionalities of the trusted platform entity, or exemplified functionalities of a network described above, e.g., by means of Fig. 1 to Fig. 7.

In embodiments, the CU 920 may generate a virtual network through which the CU 920 communicates with the DU 922. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the CU). External network virtualization is targeted to optimized network sharing. Another category is internal virtual networking which provides network-like functionality to the software containers on a single system. Virtual networking may also be used for testing the terminal device.

In embodiments, the virtual network may provide flexible distribution of operations between the DU and the CU. In practice, any digital signal processing task may be performed in either the DU or the CU and the boundary where the responsibility is shifted between the DU and the CU may be selected according to implementation.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Fig. 1 to Fig. 7 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1 to Fig. 7 or operations thereof.

Accordingto an embodimentthere is provided an apparatus comprising at least means for obtaining site information on radio access network element sites, at least some of which are usable as additional power capacity providers in a virtual power plant, means for obtaining energy balancing related information of a power grid using the virtual power plant, means for determining, based at least on the site information and the energy balancing related information, for at least one virtual power plant entity for the virtual power plant, control information relating to the virtual power plant, the control information optimizing virtual power plant utility while maintaining radio network stability, and means for transmitting said control information to the at least one virtual power plant entity.

According to an embodimentthere is provided an apparatus comprising at least means for controlling use of one or more radio access network elements as an additional power capacity provider in a virtual power plant, means for receiving, from a virtual power plant manager entity, control information relating to a virtual power plant, the control information optimizing virtual power plant utility while maintaining radio network stability, means for determining, based on at least the control information received, per a radio access network element, its use as the additional power capacity provider, and means for transmitting, at least per a radio access network element determined to be used as the additional power capacity provider, information relating to providing the power capacity in the virtual power plant.

According to an embodimentthere is provided an apparatus comprising at least means for providing additional power capacity in a virtual power plant, means for receiving from a virtual power plant controlling entity information relating to providing the power capacity in the virtual power plant, means for determining from the information one or more virtual power plant policies, and means for applying the one or more virtual power plant policies to control the providing.

Embodiments and examples as described may also be carried out in the form of a computer process defined by a computer program or portions thereof. Embodiments of the functionalities described in connection with Fig. 1 to Fig. 7 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the claims. Therefore, all words and expressions should be interpreted broadly and they are intended to illustrate, not to restrict, the embodiment. It will be obvious to a person skilled in the art that, as technology advances, the inventive concept can be implemented in various ways within the scope of the independent claims. Further, it is clear to a person skilled in the art that the described embodiments may, but are not required to, be combined with other embodiments in various ways within the scope of the independent claims.

## Claims

1. An apparatus comprising:
means for obtaining site information on radio access network element sites, at least some of which are usable as additional power capacity providers in a virtual power plant;
means for obtaining energy balancing related information of a power grid using the virtual power plant;
means for determining, based at least on the site information and the energy balancing related information, for at least one virtual power plant entity for the virtual power plant, control information relating to the virtual power plant, the control information optimizing virtual power plant utility while maintaining radio network stability; and
means for transmitting said control information to the at least one virtual power plant entity.

2. The apparatus of claim 1, further comprising:
means for determining, based at least on geographical location information or battery state of charge information in the site information, whether to add a site to a blacklist indicating that the site is not usable as an additional power capacity provider or to a whitelist indicating that the site is usable as an additional power capacity provider; and
means for transmitting at least one of the blacklist and the whitelist in the control information.

3. The apparatus of claim 2, further comprising:
means for determining that at least one local factor that is external to a site, the at least one factor having a variable value, is to be taken into account when determining, whether the site is in the blacklist; and
means for transmitting in the control information an indication of the site and the at least one local factor.

4. The apparatus of any preceding claim, further comprising:
means for determining weight factors for at least a first operation mode of the virtual power plant, a second operation mode of the virtual power plant and a third operation mode of the virtual power plant, wherein
the first operation mode comprises saving energy in the radio access network to minimize the amount of energy flow from the power grid while reducing quality of experience of network services without using batteries in the radio access network sites,
the second operation mode comprises using the batteries to provide energy to the radio access network to minimize the amount of energy flow from the power grid while maintaining the quality of experience of network services,
the third operation mode comprises discharging energy from the batteries to the grid; and
means for transmitting at least the weight factors in the control information.

5. The apparatus of any preceding claim, further comprising:
means for determining, based on internal energy saving target for at least part of the wireless network, energy saving profiles or weight factors for energy saving profiles, per a virtual power plant entity in the at least part of the wireless network, or per a site in the at least part of the wireless network; and
means for transmitting at least the energy saving profiles or weight factors in the control information.

6. The apparatus of any preceding claim, further comprising:
means for using, when determining, also information indicating measured energy consumption in the site information.

7. The apparatus of any preceding claim, further comprising:
means for transmitting in the control information price related information obtained in the energy balancing related information of a power grid and one or more condition.

8. The apparatus of any preceding claim, further comprising:
means for receiving from an external source additional energy balancing information; and
means for forwarding the additional energy balancing information in the control information.

9. The apparatus of any preceding claim, further comprising:
means for performing an offline training of a machine learning model using as training data at least real time traffic key performance indicators and long traffic key performance indicators in the site information on radio access network element sites; and
means for transmitting a trained model in the control information.

10. The apparatus of any preceding claim, further comprising:
means for transmitting in the control information configuration for the at least one virtual power plant entity, performance management information for collecting virtual power plant related performance data, and fault management information for monitoring virtual power plant related fault status; and
means for transmitting the control information over O1 or A1 interface.

11. An apparatus comprising:
means for controlling use of one or more radio access network elements as an additional power capacity provider in a virtual power plant;
means for receiving, from a virtual power plant manager entity, control information relating to a virtual power plant, the control information optimizing virtual power plant utility while maintaining radio network stability;
means for determining, based on at least the control information received, per a radio access network element, its use as the additional power capacity provider; and
means for transmitting, at least per a radio access network element determined to be used as the additional power capacity provider, information relating to providing the power capacity in the virtual power plant.

12. The apparatus of claim 11, further comprising:
means for receiving the control information over O1 or A1 interface;
means for determining, for one or more radio access network elements, which have been determined to be used as the additional power capacity provider, one or more policies;
means for transmitting the one or more policies in the information relating to providing the power capacity in the virtual power plant; and
wherein the one or more policies comprises at least one of one or more conditions to be met, one or more durations, one or more radio access network element parameters, one or more site related parameters, and/or one or more actions.

13. An apparatus comprising:
means for providing additional power capacity in a virtual power plant;
means for receiving from a virtual power plant controlling entity information relating to providing the power capacity in the virtual power plant;
means for determining from the information one or more virtual power plant policies; and
means for applying the one or more virtual power plant policies to control providing the additional power capacity.

14. The apparatus of claim 13, further comprising, when applying the one or more virtual power plant policies:
means for determining a time to take a battery related action, determine a duration of an active battery related action, determine and apply an energy consumption based profile, and/or total amount of energy to be consumed from the battery.

15. A method comprising at least:
obtaining site information on radio access network element sites, at least some of which are usable as additional power capacity providers in a virtual power plant;
obtaining energy balancing related information of a power grid using the virtual power plant;
determining, based at least on the site information and the energy balancing related information, for at least one virtual power plant entity for the virtual power plant, control information relating to the virtual power plant, the control information optimizing virtual power plant utility while maintaining radio network stability; and
transmitting said control information to the at least one virtual power plant entity.
